# EUROPEAN PATENT APPLICATION

(11) **EP 4 269 227 A1**
(43) Date of publication of application: **01.11.2023**
(21) Application number: 21915147.9
(22) Date of filing: 21.12.2021
(51) Int. Cl.: B63B 25/16, F17C 13/08, G01N 3/00, B63B 79/10, B63B 79/20, B63B 79/30

(54) **STATE ESTIMATION SYSTEM AND STATE ESTIMATION METHOD FOR WATERCRAFT LIQUIFIED GAS TANK**

(30) Priority: 28.12.2020 JP 2020219014
(71) Applicant: KAWASAKI JUKOGYO KABUSHIKI KAISHA, Kobe-shi, Hyogo 650-8670 (JP)
(72) Inventor: UEDA, Yuichiro, Kobe-shi, Hyogo 650-8670 (JP); IMAI, Tatsuya, Kobe-shi, Hyogo 650-8670 (JP); SHIRATSUCHI, Toru, Kobe-shi, Hyogo 650-8670 (JP)
(74) Representative: Arnold & Siedsma
(86) International application number: PCT/JP2021/047286
(87) International publication number: WO 2022/145287

(57) **Abstract**

Provided is a system (1) for estimating a state of a liquefied gas tank (7) installed in place in a vessel (3). The system includes: a measurement unit (31) including measuring equipment (39) configured to measure a level related to strength of the liquefied gas tank (7); a calculation unit (33) configured to calculate a level related to strength of the liquefied gas tank (7) using a pre-analysis model; a data assimilation unit (35) configured to perform data assimilation using a measurement result obtained by the measurement unit (31) to update the pre-analysis model; and an assessment unit (37) configured to assess a state of the liquefied gas tank (7) on the basis of a calculation result that is outputted from the calculation unit (33).

## Description

### CROSS REFERENCE TO THE RELATED APPLICATION

This application is based on and claims Convention priority to Japanese patent application No. 2020-219014, filed December 28, 2020, the entire disclosure of which is herein incorporated by reference as a part of this application.

### BACKGROUND OF THE INVENTION

### (Field of the Invention)

The present disclosure relates to a system and a method for estimating a state of a liquefied gas tank for a vessel.

### (Description of Related Art)

Traditionally, a carrier vessel equipped with a liquefied gas tank is used for transport of a liquefied gas such as a liquefied natural gas and liquefied hydrogen (see, for example, Patent Document 1). In general, maintenance of a liquefied gas tank for a vessel that is operated over a long time such as several decades is performed using corrective maintenance that involves checking for any fatigue damages and the like through regular inspections and conducting repair works as necessary.

### [Related Document]

### [Patent Document]

[Patent Document 1] JP Laid-open Patent Publication No. 2015-004382

### SUMMARY OF THE INVENTION

Still, it is desirable that occurrence of any damage in the tank be able to be identified in advance, since a high level of reliability is required for the tank to secure transport of a cryogenic liquefied gas. However, a tank that sits on board the vessel for a long period of time is difficult to timely inspect in practice. Hence, there is a demand for ways that make it possible to accurately predict a state of the tank in terms of strength.

An object of the present disclosure is to provide a system and a method for making it possible to accurately predict a state of a liquefied gas tank for a vessel to solve the abovementioned problem(s).

To achieve the foregoing object, the present disclosure provides a state estimation system for a liquefied gas tank for a vessel, which is a system for estimating a state of a liquefied gas tank installed in place in a vessel and includes:
a measurement unit including measuring equipment configured to measure a level or an indicator related to strength of the liquefied gas tank;
a calculation unit configured to calculate a level related to strength of the liquefied gas tank using a pre-analysis model;
a data assimilation unit configured to perform data assimilation using a measurement result obtained by the measurement unit to update the pre-analysis model; and
an assessment unit configured to assess a state of the liquefied gas tank on the basis of a calculation result that is outputted from the calculation unit.

Moreover, the present disclosure provides a state estimation method for a liquefied gas tank for a vessel, which is a method for estimating a state of a liquefied gas tank installed in place in a vessel and includes:
measuring a level related to strength of the liquefied gas tank;
calculating a level related to strength of the liquefied gas tank using a pre-analysis model;
performing data assimilation using a measurement result obtained by the measurement unit to update the pre-analysis model; and
assessing a state of the liquefied gas tank on the basis of a calculation result that is outputted from the calculation unit.

According to such features, not only can calculation using the pre-analysis model make it possible to estimate a state of the liquefied gas tank in advance, but also data assimilation using a measurement result of the liquefied gas tank can make it possible to refine the pre-analysis model and thereby allow the model to provide a more approximate representation of the liquefied gas tank which is a real object to be estimated. Thus, accurate estimate can be generated.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made by referring to the accompanying drawings. However, the embodiments and the drawings are given merely for the purpose of illustration and explanation, and should not be used to delimit the scope of the present disclosure, which scope is to be delimited by the appended claims. In the accompanying drawings, alike symbols denote alike or corresponding parts throughout the several figures. In the figures,
Fig. 1 shows the general configurations of a state estimation system for a liquefied gas tank for a vessel, as well as a liquefied gas storage vessel and a liquefied gas tank to which this system is applied in accordance with an embodiment of the present disclosure, the cross section being taken along the line I-I in Fig. 2;
Fig. 2 is a longitudinal sectional view that illustrates the general configurations of the liquefied gas tank and the liquefied gas storage vessel of Fig. 1;
Fig. 3 is a longitudinal sectional view that illustrates the general configurations of the liquefied gas tank and the liquefied gas storage vessel in accordance with a variant of the embodiment of Figs. 1 and 2;
Fig. 4 is a cross sectional view of the liquefied gas storage vessel and the liquefied gas tank of Fig. 3, the cross section being taken along the line IV-IV; and

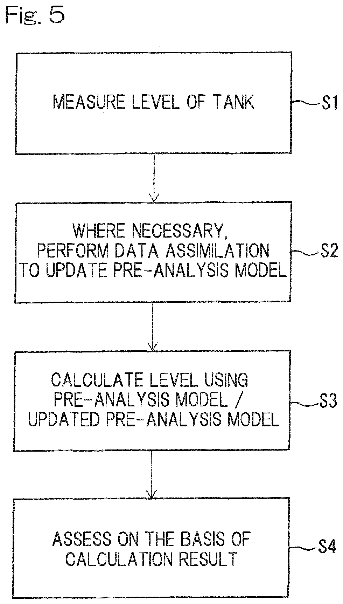

Fig. 5 is a flowchart that illustrates a state estimation method for a liquefied gas tank for a vessel in accordance with an embodiment of the present disclosure.

### DESCRIPTION OF EMBODIMENTS

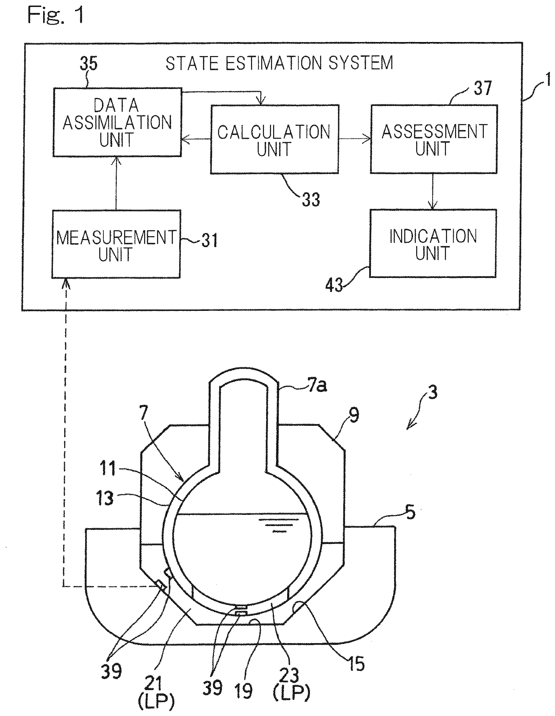

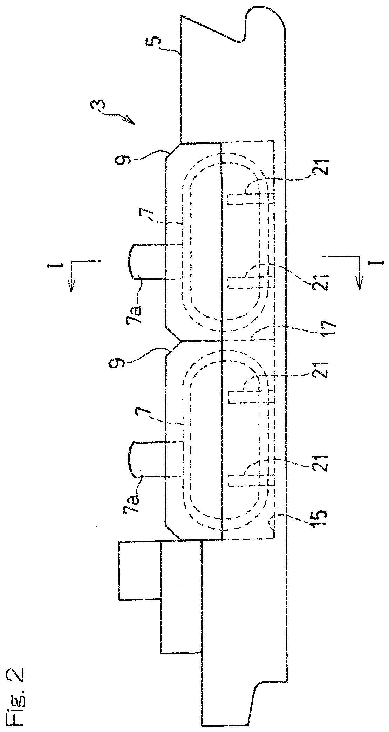

Hereinafter, preferred embodiments of the present disclosure are described with reference to the drawings. Fig. 1 depicts a liquefied gas storage vessel 3 which employs a state estimation system 1 for a liquefied gas tank for a vessel (hereinafter, simply referred to as a "state estimation system") in accordance with an embodiment of the present disclosure. As depicted in Fig. 2, this liquefied gas storage vessel 3 includes a hull 5 which floats on water, and a liquefied gas tank 7 (hereinafter, simply referred to as a "tank") installed in place in the hull 5 to store a liquefied gas.

As used herein, a "liquefied gas storage vessel" refers to a vessel capable of storing a liquefied gas in general. The liquefied gas storage vessel 3 in the instant embodiment is a liquefied gas carrier vessel. Nevertheless, examples of the liquefied gas storage vessel 3 also include a liquefied gas-fueled vessel and a bunkering vessel that supplies another vessel with a liquefied gas, in addition to a liquefied gas carrier vessel.

Mounted to the tank 7 is piping (not shown) for transporting a liquefied gas between the tank 7 and a place external thereto such as a liquefied gas storage terminal on land. In the illustrated example, the tank 7 includes a dome part 7a which projects upwards and to which one end of the piping is mounted. The piping is arranged to extend from the interior of the tank 7 to the exterior of the tank 7, penetrating through the dome part 7a.

The liquefied gas to be stored in the tank 7 is, for example, a liquefied petroleum gas (LPG; at about -45°C), a liquefied ethylene gas (LEG; at about -100°C), a liquefied natural gas (LNG; at about -160°C), liquefied hydrogen (LH₂; at about -250°C), or liquefied helium (LHe; at about -270°C).

In the instant embodiment, liquefied hydrogen is to be stored in the tank 7.

In the instant embodiment, two tanks 7 are installed in place in the hull 5 of the liquefied gas storage vessel 3. These two tanks 7 are aligned in the length direction of the hull 5. Nevertheless, a single tank 7 may be installed in the hull 5, or alternatively, three or more tanks 7 may be installed in the hull 5. Since the tanks 7 have an identical construction, reference herein is made to only one tank 7.

A tank 7 of the illustrated example is an independent tank 7 which is constructed independently of the hull 5. Also, the tank 7 is shaped in the form of a cylinder with round ends, each end being bulged like a dome. The top of the tank 7 is covered by a tank cover 9 that is provided integrally with the hull 5. It should be noted that the geometry of the tank 7 is not limited to this example and may be, for example, spherical or cuboidal.

Moreover, as depicted in Fig. 1, the tank 7 in the instant embodiment is constructed as a double-shell tank 7 having an inner shell 11 and an outer shell 13. For instance, a vacuum heat insulation layer is defined between the inner shell 11 and the outer shell 13. Nevertheless, the construction of the tank 7 is not limited to this example. For instance, the tank 7 can be a single-shell tank that is covered with a heat insulation material. The heat insulation material in this case may, for example, be formed of a plurality of vacuum heat insulation panels or be formed of a plurality of foamed panels.

A depicted in Fig. 2, the hull 5 is formed therein with a recess 15 in which the tanks 7 are placed, and this recess 15 is divided into two cells by a partition wall 17 between those tanks 7. As depicted in Fig. 1, a pair of tank support members 21 are located on the bottom wall 19 of each cell. The pair of tank support members 21 are provided at locations mutually spaced apart in the axial direction of a tank 7 to support that tank 7. Each of the tank support members 21 is arranged to protrude from the bottom wall 19. A tank 7 is positioned on the tank support members 21 so as to be supported away from the walls that define a cell in the hull 5. In the instant embodiment, the tanks 7 are installed to the hull 5 in such a manner.

Further, an inner-shell support member 23 is located between the inner shell 11 and the outer shell 13 to support the inner shell 11. In the instant example, the inner-shell support member 23 is arranged on an extension of a tank support member 21. This inner-shell support member 23 couples the inner shell 11 and the outer shell 13. Support for the inner shell 11 is provided by the hull 5 through the inner-shell support member 23 and the outer shell 13. It should be noted that the inner-shell support member 23 may be fixed to only one of the inner shell 11 or the outer shell 13 and arranged in contact with the other, or may be fixed to both of them. Further, it is not necessary that the inner-shell support member 23 be arranged on an extension of a tank support member 21, and it may be arranged at a location offset from a tank support member 21 in the length direction of the vessel.

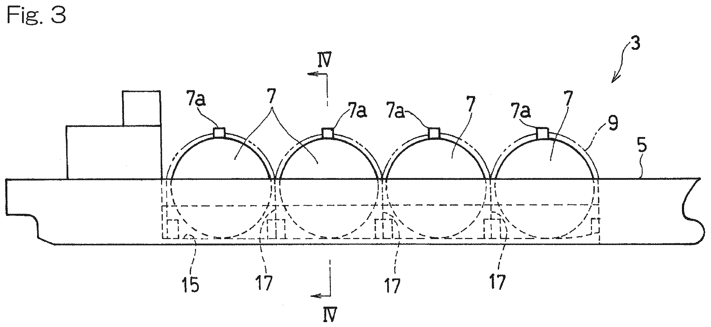

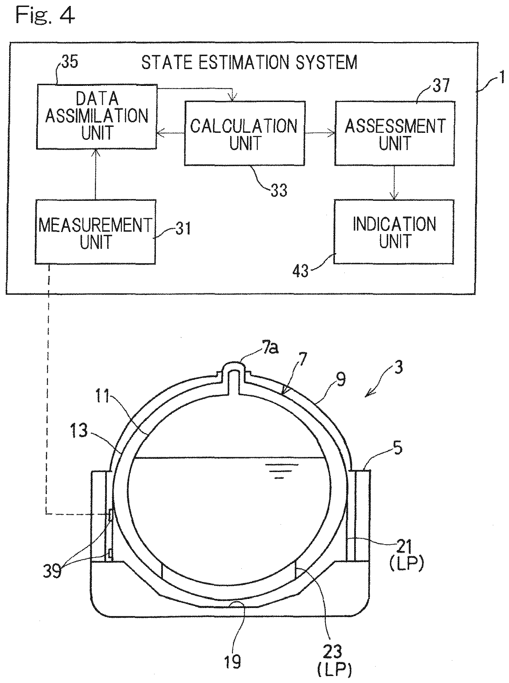

It should be noted that the mode of supporting a tank 7 relative to the hull 5 is not limited to the abovementioned example and can be selected as appropriate depending on the construction of the tank(s) 7 and the hull 5. For example, when a tank 7 has a spherical geometry as in the variant shown in Fig. 3, a cylindrical tank support member 21 which supports that tank 7 relative to the hull 5 as well as a cylindrical inner-shell support member 23 interposed between the inner shell 11 and the outer shell 13 can be adopted as shown in Fig. 4.

Next, the state estimation system 1 and a state estimation method using this system in accordance with the instant embodiment are described, the system and the method being used for estimating a state of a liquefied gas tank 7 having the abovementioned configuration. As depicted in Fig. 1, the state estimation system 1 includes a measurement unit 31, a calculation unit 33, a data assimilation unit 35, and an assessment unit 37.

The measurement unit 31 includes measuring equipment 39 that measures a level related to strength of a liquefied gas tank 7, and uses the measuring equipment 39 to obtain a measurement of such a level (at a measurement step S1). Examples of "a level related to strength of a liquefied gas tank 7", which is measured by the measuring equipment 39 of the measurement unit 31, include a degree of deformation (or strain) and a cumulative fatigue damage at a portion of interest. Examples of the measuring equipment 39 of the measurement unit 31 include a strain sensor that measures a degree of strain and a fatigue sensor that measures a crack level required for calculation of a cumulative fatigue damage. The measuring equipment 39 may comprise a sensor that measures only one of such parameters or a plurality of sensors that measure different types of such parameters.

In the instant embodiment, the measuring equipment 39 is mounted to a part that constitutes a load transfer path LP from the tank 7 to the hull 5 (hereinafter, simply referred to as a "load transfer path"). More specifically, in the instant example, such measuring equipment 39 is mounted to the tank support member(s) 21 and the inner-shell support member 23, each of which is a part that constitutes the load transfer path LP.

In particular, such measuring equipment 39 is mounted, for example, near a contact part of a tank support member 21 with a tank 7 and near a coupling part of a tank support member 21 to the hull 5. Such measuring equipment 39 is mounted, for example, near contact parts of the inner-shell support member 23 with the inner shell 11 and with the outer shell 13.

By thus mounting such measuring equipment 39 in/on the load transfer path LP, where reduction in strength due to fatigue is more likely to occur, such a level of a tank 7 can be measured in an efficient way. It should be noted that examples of a part that constitutes the load transfer path LP in/on which measuring equipment 39 is to be mounted are not limited to the abovementioned tank support member(s) 21 and inner-shell support member 23, and can also include parts of the tank(s) 7 or the hull 5 which are in proximity to these members 21, 23. Further, such measuring equipment 39 may be mounted to another part as an alternative to or in addition to that/those in/on the load transfer path LP. Furthermore, measuring equipment 39 may be mounted to a part of the hull 5 if that part is one that can influence strength of the tank 7.

The calculation unit 33 calculates a level related to strength of a tank 7 using a pre-analysis model (at a calculation step S2). In the pre-analysis model, conditions are set such as physical properties of materials, boundary conditions, and load conditions at the design stage of the hull 5 and a tank 7. The calculation unit 33 calculates a level related to strength of a tank 7 such as a stress or a strain, using this pre-analysis model.

The data assimilation unit 35 performs data assimilation using a measurement result obtained by the measurement unit 31 to update the pre-analysis model (at a data assimilation step S3). Data assimilation is a process that statistically corrects uncertainty factors of a numerical model using real-world measurements. The data assimilation unit 35 in the instant embodiment compares the measurement result obtained by the measurement unit 31 with the abovementioned various conditions and parameters set in a numerical analysis model employed in the calculation unit 33 and, if there is a significant difference therebetween, performs correction using the measurement result to update the pre-analysis model.

The assessment unit 37 assesses a state of the aforementioned liquefied gas tank(s) 7 on the basis of a calculation result that is outputted from the calculation unit 33 (at an assessment step S4). In particular, the assessment unit 37 calculates a cumulative fatigue damage value on the basis of a value such as a stress or a strain that is outputted from the calculation unit 33 and assesses, for example, the need for immediate repairs or an estimated time left until the need for repairs arises.

The assessment unit 37 in the instant embodiment assesses, using structural reliability analysis, strength of a tank 7 which is an object to be estimated. In the structural reliability analysis, a probability of a fatigue damage, a static fracture, a brittle fracture, etc. occurring in a structure of interest within a given period of time is calculated. In this example embodiment, the assessment unit 37 calculates a probability of a fatigue damage occurring in a tank 7 within an expected operation period as mentioned earlier, using structural reliability analysis. Examples of particular methods for structural reliability analysis can include typically known methods like a numerical integration method, a Monte-Carlo simulation method, a first-order reliability assessment method, a second-order reliability assessment method, a high-order moment method, an importance sampling method, and a response surface method.

By thus relying on structural reliability analysis to provide an assessment, an assessment result of a state of a tank 7 can be outputted as more practical information than the need for repairs or the like. Nevertheless, assessment on a state of a tank 7 by the assessment unit 37 may be outputted in the form of a definite value of a cumulative fatigue damage, without relying on structural reliability analysis.

The state estimation system 1 may further include an indication unit 43 that indicates in an appropriate way an assessment result by the assessment unit 37. The indication unit 43 is configured to display an alert indicating the need for repairs or an alert indicating the need to avoid a heavy weather according to, for example, the degree of reduction in fatigue strength and/or the probability of a fatigue damage occurring within a given short period of time.

Note that a tank 7 to which the state estimation system 1 and the state estimation method in accordance with the instant embodiment are applied is not limited to the above examples. For instance, a tank 7 may be an independent- tank 7 having a cuboidal shape or may be, instead of such an independent type, a so-called membrane tank that is formed integrally with the hull 5.

Functions accomplished by the elements described herein may be implemented by circuitry or processing circuitry that includes a general-purpose processor, an application-specific processor, an integrated circuit, application-specific integrated circuits (ASICs), a central processing unit (CPU), a more traditional circuit, and/or any combination thereof, which is/are programmed to accomplish the described function(s). A processor can be regarded as circuitry or processing circuitry as it contains transistors and/or other additional circuits. The processor can be a programmed processor which executes programs stored in a memory.

According to the state estimation system 1 and the state estimation method in accordance with the embodiment thus far described, not only can calculation using the pre-analysis model make it possible to estimate a state of a liquefied gas tank 7 in advance, but also data assimilation using a measurement result of a liquefied gas tank 7 can make it possible to refine the pre-analysis model and thereby allow the model to provide a more approximate representation of the liquefied gas tank 7 which is a real object to be estimated. Thus, accurate estimate can be generated.

Although the present disclosure has been described in terms of the preferred embodiments thereof with reference to the drawings, various additions, modifications, or omissions may be made without departing from the scope of the present disclosure. Accordingly, such variants are included within the scope of the present disclosure.

### [Reference Symbols]

- 1: state estimation system
- 3: liquefied gas storage vessel (vessel)
- 5: hull
- 7: liquefied gas tank
- 9: tank cover
- 21: tank support member
- 23: inner-shell support member
- 31: measurement unit
- 33: calculation unit
- 35: data assimilation unit
- 37: assessment unit
- LP: load transfer path

## Claims

1. A system for estimating a state of a liquefied gas tank installed in place in a vessel, the system comprising:
a measurement unit including measuring equipment configured to measure a level related to strength of the liquefied gas tank;
a calculation unit configured to calculate a level related to strength of the liquefied gas tank using a pre-analysis model;
a data assimilation unit configured to perform data assimilation using a measurement result obtained by the measurement unit to update the pre-analysis model; and
an assessment unit configured to assess a state of the liquefied gas tank on the basis of a calculation result that is outputted from the calculation unit.

2. The system as claimed in claim 1, wherein the assessment unit is configured to assess strength of an object to be estimated, using structural reliability analysis.

3. The system as claimed in claim 1 or 2, wherein the liquefied gas tank is constructed as a distinct unit from a hull of the vessel and is supported within the hull, and
the measuring equipment of the measurement unit is mounted to a part that constitutes a load transfer path from the liquefied gas tank to the hull.

4. The system as claimed in claim 3, wherein the measuring equipment comprises measuring equipment mounted to a tank support member with which the liquefied gas tank is supported by the hull and which is a part that constitutes the load transfer path.

5. The system as claimed in claim 3 or 4, wherein the liquefied gas tank comprises a tank having a double-shell structure which includes an inner shell, an outer shell, and an inner-shell support member arranged between the inner shell and the outer shell to support the inner shell, and
the measuring equipment comprises measuring equipment mounted to the inner-shell support member which is a part that constitutes the load transfer path.

6. A method for estimating a state of a liquefied gas tank installed in place in a vessel, the method comprising:
measuring a level related to strength of the liquefied gas tank;
calculating a level related to strength of the liquefied gas tank using a pre-analysis model;
performing data assimilation using a measurement result obtained by the measurement unit to update the pre-analysis model; and
assessing a state of the liquefied gas tank on the basis of a calculation result that is outputted from the calculation unit.
